# DEMANDE DE BREVET EUROPEEN

(11) **EP 4 012 891 A1**
(43) Date de publication de la demande: **15.06.2022**
(21) Numéro de dépôt: 21211076.1
(22) Date de dépôt: 29.11.2021
(51) Int. Cl.: H02K 1/20, H02K 9/06, H02K 9/08, H02K 9/22

(54) **STATOR DE MACHINE ÉLECTRIQUE TOURNANTE COMPORTANT UN DISSIPATEUR THERMIQUE**

(30) Priorité: 10.12.2020 FR 2012976
(71) Demandeur: Moteurs Leroy-Somer, 16915 Angouleme (FR)
(72) Inventeur: BOIRLAUD, Matthieu, 16710 Saint Yrieix sur Charente (FR)
(74) Mandataire: Nony

(57) **Abrégé**

Stator (1) de machine électrique tournante, comportant :
- une culasse (2) comportant un empilement de tôles magnétiques (3), et
- au moins un dissipateur thermique (10) rapporté sur la surface extérieure (4) de la culasse (2),
le stator (1) comportant au moins un conduit (5) de refroidissement ménagé dans l'empilement de tôles magnétiques (3) de la culasse (2) et/ou dans ledit au moins un dissipateur thermique (10).

## Description

### Domaine technique

La présente invention concerne le domaine des machines électriques tournantes, et notamment les stators de telles machines, plus particulièrement des machines électriques tournantes dites ouvertes, c'est-à-dire avec une circulation de fluide, en particulier de gaz, par exemple de l'air, entre l'intérieur de la machine, le long du stator, et l'extérieur. Il peut notamment s'agir de générateurs électriques ou de moteurs électriques.

### Technique antérieure

Le refroidissement du stator d'une machine électrique tournante peut s'effectuer principalement par l'augmentation de la surface d'échange avec un fluide de refroidissement.

L'augmentation de la surface d'échange avec l'air du stator permet d'améliorer les performances thermiques des machines électriques. On pourra citer par exemple les brevets US 1882487 ou encore US 2818515, et plus récemment US 4912350, WO 2005/022718 ou encore US 8427018B2.

Dans ces machines, on crée des canaux de circulation d'air ou des ailettes à la périphérie du stator, en utilisant les tôles magnétiques du stator pour former les canaux ou les ailettes. On utiliser la partie active magnétique naturellement présente dans les coins du carré de tôle.

US 2019229585 présente un moteur électrique comprenant un stator et des dissipateurs thermiques disposés sur différentes parois latérales du stator.

US 5 542 176 divulgue une plaque de rayonnement thermique comportant une pluralité de rainures formées dans une base, et une pluralité d'ailettes engagées dans les rainures.

DE 37 35 734 décrit un générateur asynchrone comprenant un stator comprenant des disques disposés les uns derrière les autres dans la direction longitudinale, un rotor et un carter.

Il existe un besoin pour améliorer encore le refroidissement du stator des machines électrique tournantes, et d'augmenter la surface d'échange avec un fluide de refroidissement.

### Exposé de l'invention

La présente invention répond à tout ou partie de ce besoin grâce à, selon l'un de ses aspects, un stator de machine électrique tournante, comportant :
- une culasse comportant un empilement de tôles magnétiques, et
- au moins un dissipateur thermique rapporté sur la surface extérieure de la culasse.

Le stator peut comporter au moins un conduit de refroidissement ménagé dans l'empilement de tôles magnétiques de la culasse et/ou dans ledit au moins un dissipateur thermique. Dans un mode de réalisation, le stator comporte au moins un conduit de refroidissement ménagé dans l'empilement de tôles magnétiques de la culasse. Dans un mode de réalisation, le stator comporte au moins un conduit de refroidissement ménagé dans ledit au moins un dissipateur thermique.

Grâce à l'invention, il est possible d'optimiser le refroidissement du stator tout en limitant les pertes de charge et les coûts de fabrication. L'ajout du ou des dissipateurs thermiques permet de lisser le champ de température dans le stator, et de faire baisser sa valeur moyenne et sa valeur maximale.

De préférence, le stator est refroidi par la circulation d'un fluide de refroidissement, notamment un gaz, en particulier de l'air, dans ou sur ledit au moins un dissipateur thermique et dans ledit au moins un conduit de refroidissement.

Par « rapporté », on entend que le dissipateur thermique est disposé sur la surface extérieure de la culasse après la fabrication de celle-ci. Un tel dissipateur thermique rapporté est particulièrement avantageux et utile dans le cas d'un stator droit.

Par « conduit de refroidissement », on entend une cavité formée dans une pièce, la cavité étant ouverte à ses deux extrémités et comportant une surface développable refermée sur elle-même. Le conduit de refroidissement peut ainsi avoir une section transversale de circonférence fermée.

Le ou les conduits de refroidissement peuvent être ménagés dans un dissipateur thermique et/ou dans la culasse.

Le conduit de refroidissement est avantageusement configuré pour permettre la circulation d'un fluide de refroidissement de l'une de ses extrémités à l'autre, notamment un gaz, par exemple de l'air. Le conduit de refroidissement peut permettre le transfert de la chaleur produite dans le stator au fluide de refroidissement circulant dans le conduit de refroidissement.

L'utilisation d'au moins un conduit permet de produire un écoulement fluide de refroidissement relativement stable, ce qui limite les pertes de charge fluide et optimise donc le flux. De plus, le besoin en énergie pour produire l'écoulement est limité.

Ledit au moins un dissipateur thermique peut être rapporté sur la culasse à proximité d'une zone de forte production de chaleur du stator.

Dans un mode de réalisation, la culasse comporte un ou des conduits de refroidissement et ledit au moins un dissipateur thermique comporte également un ou des conduits de refroidissement.

Dans un autre mode de réalisation, la culasse ne comporte pas de conduit de refroidissement et ledit au moins un dissipateur thermique comporte un ou des conduits de refroidissement.

Dans un autre mode de réalisation encore, la culasse comporte un ou des conduits de refroidissement et ledit au moins un dissipateur thermique n'en comporte pas.

Un dissipateur peut comporter entre 0 et 100 conduits de refroidissement, mieux entre 1 et 80, voire entre 2 et 60, encore mieux entre 3 et 40, par exemple entre 4 et 20 conduits de refroidissement.

La culasse peut comporter au moins un aplat, au moins un dissipateur thermique étant rapporté sur l'aplat de la culasse. L'utilisation d'au moins un aplat peut permettre d'améliorer la qualité du contact entre la culasse et le ou les dissipateurs thermiques. La culasse peut comporter un ou plusieurs aplats, par exemple deux ou quatre aplats. Le ou les aplats peuvent s'étendre longitudinalement parallèlement à un axe longitudinal du stator. Certains des aplats ou tous les aplats de la culasse peuvent être formés par des bords d'une bande de tôle magnétique ayant servie à la fabrication des tôles magnétiques de l'empilement.

L'ajout de dissipateurs thermiques sur les aplats peut permettre d'améliorer le refroidissement du stator dans une zone qui ne pourrait pas être pourvue de conduits de refroidissement ménagés dans l'empilement de tôles magnétiques de la culasse, dans le cas où les aplats de la culasse sont formés par des bords d'une bande de tôle magnétique ayant servie à la fabrication des tôles magnétiques de l'empilement.

En variante, la culasse ne présente pas d'aplat, la partie dudit au moins un dissipateur thermique en contact avec la culasse ayant une forme sensiblement correspondante à celle de la culasse, par exemple partiellement circulaire.

La culasse peut comporter au moins une rainure recevant au moins un dissipateur thermique. La rainure peut permettre de positionner et de centrer ledit au moins un dissipateur thermique. La culasse peut comporter une ou plusieurs rainures, par exemple deux ou quatre rainures.

Lorsque la culasse comporte un aplat, la rainure est avantageusement située sur l'aplat, par exemple au milieu de l'aplat. Elle permet de bien positionner le dissipateur thermique par rapport à l'aplat.

La rainure peut avoir en section transversale une forme de demi-cercle, carrée ou triangulaire. La rainure est avantageusement formée dans les tôles magnétiques de la culasse. La rainure peut s'étendre parallèlement à l'axe longitudinal du stator et s'étendre, ou non, d'un bord à l'autre du stator.

Ledit au moins un dissipateur thermique peut comporter une nervure longitudinale sur sa face destinée à venir en contact avec la culasse, de forme correspondante à celle de la rainure. La nervure peut avoir en section transversale une forme de demi-cercle, carrée ou triangulaire.

La culasse peut comporter au moins une encoche recevant au moins un dissipateur thermique. L'encoche peut s'étendre parallèlement à l'axe longitudinal du stator, notamment d'un bord à l'autre du stator. La culasse peut comporter une ou plusieurs encoches, par exemple entre 2 et 500 encoches, mieux entre 4 et 400 encoches, voire entre 8 et 200 encoches. La culasse peut comporter plusieurs encoches, une partie seulement des encoches comportant au moins un dissipateur thermique. La culasse peut également comporter des encoches dépourvues de dissipateur thermique. L'intérêt d'une telle configuration est la grande modularité en termes de nombre total de dissipateurs thermiques installés sur le stator, que l'on peut moduler en fonction des besoins en refroidissement et/ou du coût.

La ou les encoches peuvent avoir en section transversale une forme empêchant le mouvement radial dudit au moins un dissipateur thermique, par exemple une forme de T renversé.

Dans ce cas, ledit au moins un dissipateur thermique peut se présenter, sous la forme d'une lame. Le dissipateur a dans ce cas, de préférence, une forme aplatie, s'étendant le long de l'axe longitudinal du stator. Il peut avantageusement avoir une épaisseur comprise entre 0,5 mm et 20 mm, notamment comprise entre 1 mm et 5 mm.

La partie de la lame reçue dans l'encoche peut avoir une forme et des dimensions sensiblement égales à celles de l'encoche. La lame peut se présenter sous la forme d'un T, la barre transversale du T ayant une longueur bien inférieure à celle de la barre verticale.

La lame peut être droite, courbe, ondulée, ou comporter des portions droites et des portions courbes.

Quand le stator comporte des dissipateurs thermiques sous forme de lames, le stator peut comporter un ou plusieurs dissipateurs thermiques, par exemple entre 2 et 500 dissipateurs thermiques, mieux entre 4 et 400 dissipateurs thermiques, voire entre 8 et 200 dissipateurs thermiques.

Le stator peut comporter une pâte thermique dans l'encoche permettant d'améliorer le contact thermique à l'interface entre ledit au moins un dissipateur thermique et la culasse.

En variante, ledit au moins un dissipateur thermique peut comporter au moins un conduit de refroidissement et au moins une extrémité reçue dans l'encoche.

Le stator peut comporter plusieurs dissipateurs thermiques repartis uniformément sur la surface extérieure de la culasse du stator.

Par « répartis uniformément », on entend que les dissipateurs thermiques sont positionnés sur la culasse selon un schéma répétitif, par exemple avec un écartement circonférentiel constant entre deux dissipateurs thermiques consécutifs et/ou entre deux groupes de dissipateurs thermiques, et/ou un positionnement longitudinal sur la culasse alignés ou en variante disposés en quinconce.

Dans un mode de réalisation, les dissipateurs thermiques peuvent être répartis circonférentiellement autour de l'axe du stator, par exemple à 180° ou à 90°, ou encore à 60° ou à 45° les uns des autres.

Le stator peut dans un mode de réalisation comporter un ou plusieurs dissipateurs thermiques le long d'un axe longitudinal parallèle à l'axe longitudinal du stator, par exemple 2, 3 ou 4 dissipateurs thermiques consécutifs le long d'un axe longitudinal parallèle à l'axe longitudinal du stator. Lorsque le stator comporte au moins deux dissipateurs thermiques consécutifs le long d'un axe longitudinal, les dissipateurs thermiques consécutifs peuvent être séparés d'un espacement non nul.

En variante, le stator peut comporter plusieurs dissipateurs thermiques répartis de manière irrégulière.

Ledit au moins un dissipateur thermique peut comporter au moins une ailette. Par « ailette », on entend une plaquette permettant d'améliorer les échanges thermiques avec le fluide de refroidissement. Les ailettes peuvent avoir différentes longueurs, épaisseurs et différentes orientations. La ou les ailettes peuvent par exemple être orientées circonférentiellement, ou radialement, ou obliquement. Ledit au moins un dissipateur thermique peut comporter entre 2 et 60 ailettes, mieux entre 4 et 40 ailettes, voire entre 6 et 20 ailettes. Les ailettes peuvent être reliées entre elles par une partie circonférentielle, destinée à être fixée à la culasse du stator. La partie circonférentielle peut être plane ou arrondie.

Ledit au moins un dissipateur thermique peut comporter des conduits de refroidissement et des ailettes. Les ailettes peuvent être disposées sur des parois latérales du dissipateur thermique.

Le stator peut comporter des conduits de refroidissement ménagés dans l'empilement de tôles magnétiques de la culasse, ledit au moins un dissipateur thermique étant rapporté sur le stator entre lesdits conduits de refroidissement. Les conduits de refroidissement ménagés dans les tôles magnétiques peuvent s'étendre selon l'axe longitudinal du stator.

La culasse peut comporter différents paquets de conduits de refroidissement. Les conduits de refroidissement de la culasse, notamment les paquets de conduits de refroidissement, peuvent être disposés en quinconce longitudinalement et circonférentiellement. Dans ce cas, les dissipateurs thermiques peuvent être positionnés en quinconce entre les conduits de refroidissement ménagés dans les tôles magnétiques.

En variante ou en combinaison, les conduits de refroidissement ménagés dans les tôles magnétiques peuvent s'étendre d'un bord à l'autre du stator.

Le stator s'étend, de préférence, selon un axe longitudinal, ledit au moins un dissipateur thermique s'étendant parallèlement à l'axe longitudinal du stator. Ledit au moins un dissipateur thermique peut s'étendre d'un bord à l'autre du stator, ou non.

La culasse peut avoir en section transversale un contour de forme circulaire, ou hexagonale ou encore octogonale, par exemple, cette liste n'étant pas limitative.

Ledit au moins un dissipateur thermique est, de préférence, réalisé dans un matériau à forte conductivité thermique, notamment en aluminium.

Ledit au moins un dissipateur thermique peut être réalisé dans un matériau amagnétique.

Ledit au moins un dissipateur thermique peut être rapporté sur la culasse par collage, soudage, coulage, vissage, montage à force, et/ou frettage.

Lorsque ledit au moins un dissipateur thermique comporte une lame reçue dans des encoches, celle-ci peut être formée sur la culasse par coulage d'aluminium sous pression.

En variante, ledit au moins un dissipateur thermique peut être rapporté sur la surface extérieure de la culasse par frettage afin d'obtenir un bon contact entre la culasse et ledit au moins un dissipateur thermique. Lorsque ledit au moins un dissipateur thermique est rapporté par frettage, cela peut permettre de rigidifier le stator. Ledit au moins un dissipateur thermique peut avoir un rôle mécanique, complémentaire au refroidissement.

Avant de rapporter ledit au moins un dissipateur thermique, un traitement de surfaçage peut être réalisé sur la culasse. Un tel traitement peut permettre d'améliorer le contact entre la culasse et ledit au moins un dissipateur thermique.

Dans un mode de réalisation, on peut souder des plaques et/ou fixer des rondelles aux extrémités longitudinales de la culasse, afin de bloquer le ou les dissipateurs thermiques pour éviter qu'ils ne se déplacent axialement.

L'invention a encore pour objet, selon un autre de ses aspects, en combinaison avec ce qui précède, une machine électrique tournante, comportant un stator tel que décrit précédemment. La machine peut comporter en outre un rotor.

Grâce à l'invention, il est possible d'optimiser le refroidissement de la machine électrique tout en limitant les pertes de charge magnétique et les coûts de fabrication.

Il est également possible d'utiliser une même culasse de stator pour différents types de machine électrique ou différentes utilisations de machines électriques, en adaptant le nombre et le positionnement du ou des dissipateurs thermiques.

La machine électrique peut être un moteur ou un générateur.

Le stator peut être droit, étant non vrillé. En variante, le stator peut être vrillé.

Le stator peut comporter un bobinage lequel peut être disposé sur des dents de l'empilement de tôles magnétiques. Le bobinage peut comporter des bobines, chaque bobine étant disposée sur une dent, le bobinage étant alors dit « concentré ».

En variante, les bobines peuvent entourer plusieurs dents consécutives, le bobinage étant alors dit « distribué ».

En variante encore, le bobinage peut comporter des épingles en U ou en I.

Le rotor peut être à aimants permanents, disposés en surface d'une masse rotorique ou insérer circonférentiellement ou radialement dans celle-ci, ou étant disposés en U, en V ou en W, en une ou plusieurs couches.

En variante, le rotor peut être bobiné, ou en variante encore il peut être à cage d'écureuil.

La machine peut comporter un axe de rotation, qui peut être confondu avec l'axe longitudinal du stator.

La machine peut comporter un ventilateur entraîné par le rotor. Le ventilateur peut notamment être disposé sur un arbre du rotor. La machine peut comporter un unique ventilateur, disposé d'un côté de la machine. Dans la machine peut ainsi circuler un flux de fluide de refroidissement, par exemple de gaz, notamment de l'air, d'un côté vers l'autre, dans un seul sens. Ce flux est créé par une élévation de pression d'un côté de la machine, puis traverse le stator, passant en particulier dans le ou les conduits de refroidissement susmentionnés, et dans le ou les dissipateurs thermiques.

La machine peut comporter une carcasse dans laquelle le stator est inséré. Le stator peut être fixé dans la carcasse par frettage de la surface circonférentielle formée par des conduits de refroidissement ménagés dans les tôles magnétiques, et/ou par frettage du ou des dissipateurs thermiques. On peut utiliser un frettage à chaud, afin d'améliorer le serrage radial et avoir une meilleure tenue mécanique du stator avec la carcasse.

Ledit au moins un dissipateur thermique peut être fixé sur la carcasse. Ledit au moins un dissipateur thermique peut être fixé sur la carcasse par frettage afin d'améliorer le contact surfacique. La carcasse peut être utilisé comme source froide. Le frettage du ou des dissipateurs thermiques dans la carcasse permet d'améliorer la tenue mécanique de la machine.

En variante, un espace peut être laissé entre ledit au moins un dissipateur thermique et la carcasse afin de favoriser l'échange thermique avec un fluide de refroidissement circulant dans la carcasse.

La machine n'est pas limitée à une gamme de tension ou à un type de bobinage, ni à une gamme de puissance ou à une gamme de vitesse.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] la figure 1 représente, en perspective, un exemple de stator selon l'invention,
[Fig 2] la figure 2 représente, en perspective, partiellement, un agrandissement du stator de la figure 1,
[Fig 3] la figure 3 est une vue similaire à la figure 2 d'un autre exemple de stator selon l'invention,
[Fig 4] la figure 4 est une vue similaire à la figure 2 d'un autre exemple de stator selon l'invention,
[Fig 5] la figure 5 est une vue similaire à la figure 2 d'un autre exemple de stator selon l'invention,
[Fig 6] la figure 6 représente, en perspective, partiellement, un exemple de culasse d'un stator comportant une rainure selon l'invention,
[Fig 7] la figure 7 représente, en perspective, partiellement, un exemple de stator selon l'invention comportant la culasse de la figure 6,
[Fig 8] la figure 8 représente, en perspective, partiellement, un autre exemple de stator selon l'invention comportant la culasse de la figure 6,
[Fig 9] la figure 9 représente, en perspective, partiellement, un autre exemple de stator selon l'invention comportant la culasse de la figure 6,
[Fig 10] la figure 10 représente, en perspective, partiellement, un autre exemple de stator selon l'invention,
[Fig 11] la figure 11 représente, en perspective, partiellement, un autre exemple de stator selon l'invention,
[Fig 12] la figure 12 est une coupe transversale, partielle, du stator de la figure 10,
[Fig 13] la figure 13 représente, en perspective, un autre exemple de stator selon l'invention,
[Fig 14] la figure 14 représente, en perspective, partiellement, la culasse du stator de la figure 13,
[Fig 15] la figure 15 représente, en perspective, partiellement, un agrandissement du stator de la figure 13,
[Fig 16] la figure 16 représente, en perspective, un autre exemple de stator selon l'invention, et
[Fig 17] la figure 17 est une vue selon l'axe longitudinal, schématique et partielle, d'un exemple de machine électrique selon l'invention.

### Description détaillée

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites. Sur les figures, les proportions réelles n'ont pas toujours été respectées, dans un souci de clarté.

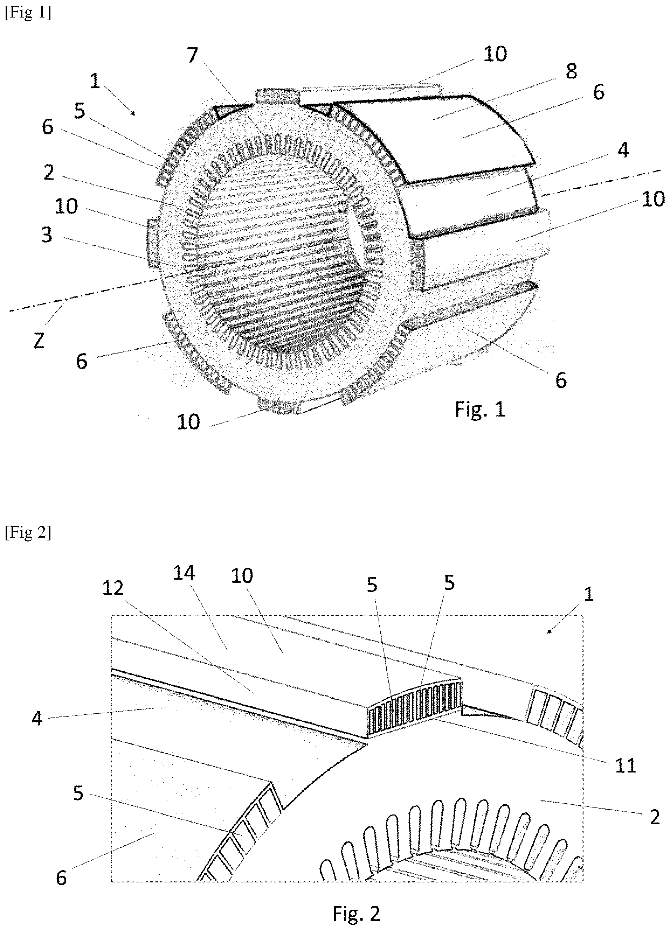

On a illustré à la figure 1 un premier exemple de stator 1 de machine électrique tournante selon l'invention. Le stator 1 comporte une culasse 2 s'étendant selon un axe longitudinal Z du stator, et comportant un empilement de tôles magnétiques 3. La culasse présente une section transversale avec un contour de forme circulaire.

La culasse comporte également des dents 7 formées dans l'empilement de tôles magnétiques 3 et permettant de disposer un bobinage.

Dans cet exemple, plusieurs conduits 5 de section transversale de circonférence fermée s'étendant selon l'axe longitudinal Z sont ménagés dans l'empilement de tôles magnétiques 3 et regroupés en quatre paquets 6 de conduits à 90° les uns des autres. Dans cet exemple, les conduits 5 s'étendent d'un bord à l'autre du stator 1.

Les conduits 5 ménagés dans l'empilement de tôles magnétiques 3 comportent également une surface circonférentielle 8 arrondie.

Le stator 1 comporte en outre, dans cet exemple, quatre dissipateurs thermiques 10 rapportés sur la surface extérieure 4 de la culasse 2 et s'étendant selon l'axe longitudinal Z d'un bord à l'autre du stator 1.

Les quatre dissipateurs thermiques 10 rapportés sont radialement répartis de manière uniforme sur la surface extérieure 4 de la culasse 2, dans cet exemple tous les 90°.

Comme visible sur la figure 2, les dissipateurs thermiques 10 comportent des conduits 5 de section transversale de circonférence fermée, dans cet exemple seize conduits 5.

Les dissipateurs thermiques 10 sont, dans cet exemple, réalisés en aluminium et rapportés par frettage sur des aplats 11 de la culasse 2. Avant le frettage des dissipateurs thermiques 10, un traitement de surfaçage est réalisé au niveau des aplats 11 afin d'améliorer l'état de surface.

Les aplats 11 de la culasse 2 sont formés par des bords d'une bande de tôle magnétique 3 ayant servie à la fabrication des tôles magnétiques 3 de l'empilement.

Les dissipateurs thermiques 10 comportent également une surface circonférentielle 14 arrondie.

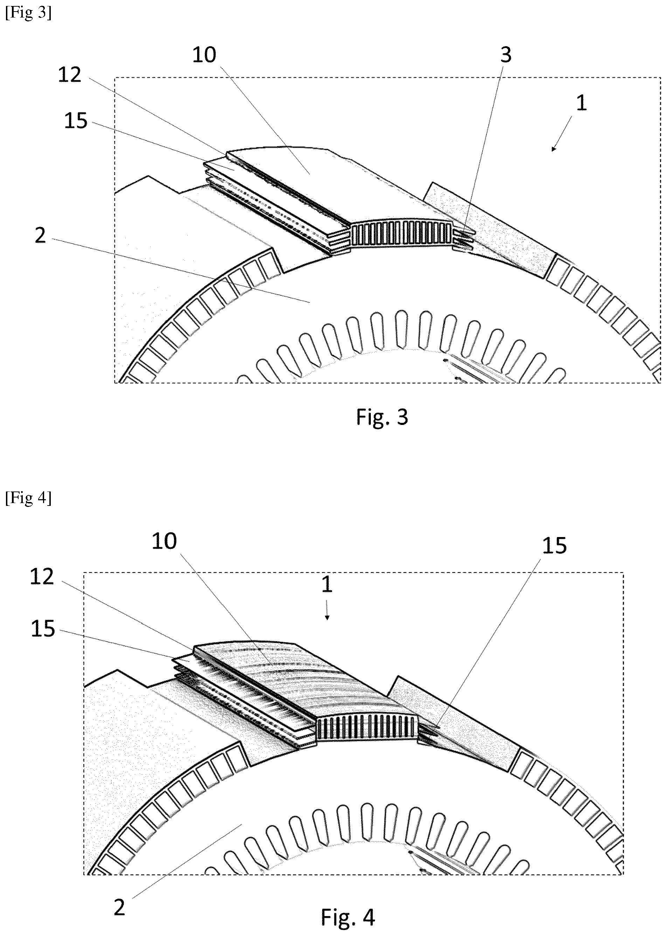

Dans les exemples des figures 3 à 5, les dissipateurs thermiques comportent des ailettes 15 circonférentielles sur les parois latérales 12 des dissipateurs thermiques 10.

Dans les exemples des figures 3 et 4, un dissipateur thermique 10 comporte trois ailettes 15 sur chaque paroi latérale 12. Les ailettes 15 de la figure 3 présentent une épaisseur deux fois supérieure à celle de la figure 4.

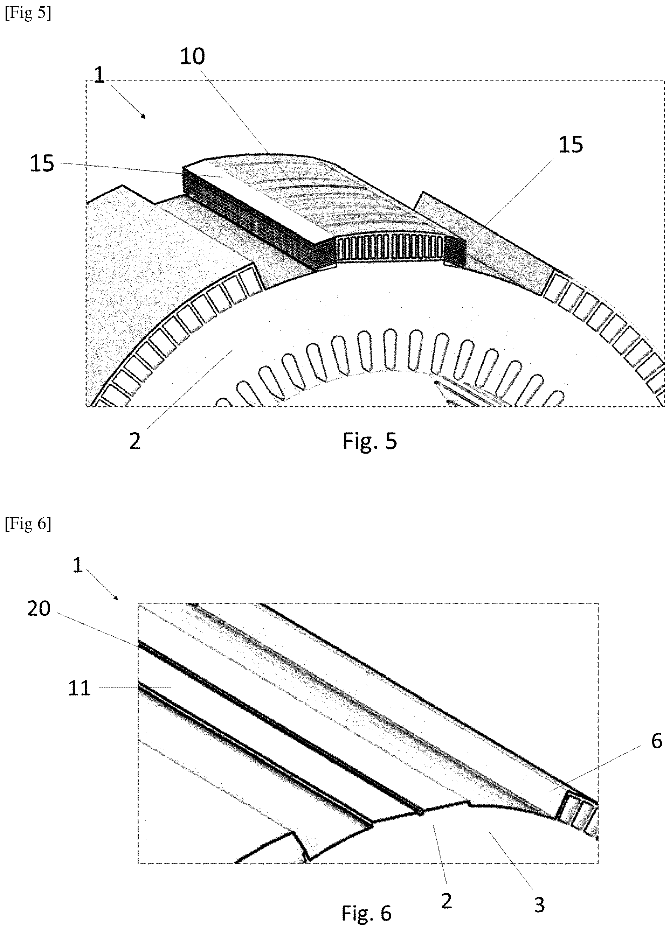

Dans l'exemple de la figure 5, un dissipateur thermique 10 comporte huit ailettes 15 sur chaque paroi latérale 12, présentant une épaisseur sensiblement égale à l'épaisseur des ailettes 15 de la figure 4.

On a illustré sur la figure 6 un exemple de culasse 2 comportant des aplats 11 comportant chacun une rainure 20. Les rainures 20 sont formées dans les tôles magnétiques 3 au centre des aplats 11 et s'étendent selon l'axe longitudinal Z d'un bord à l'autre de la culasse. Les rainures 20 présentent, dans cet exemple, une section transversale en forme de demi-cercle.

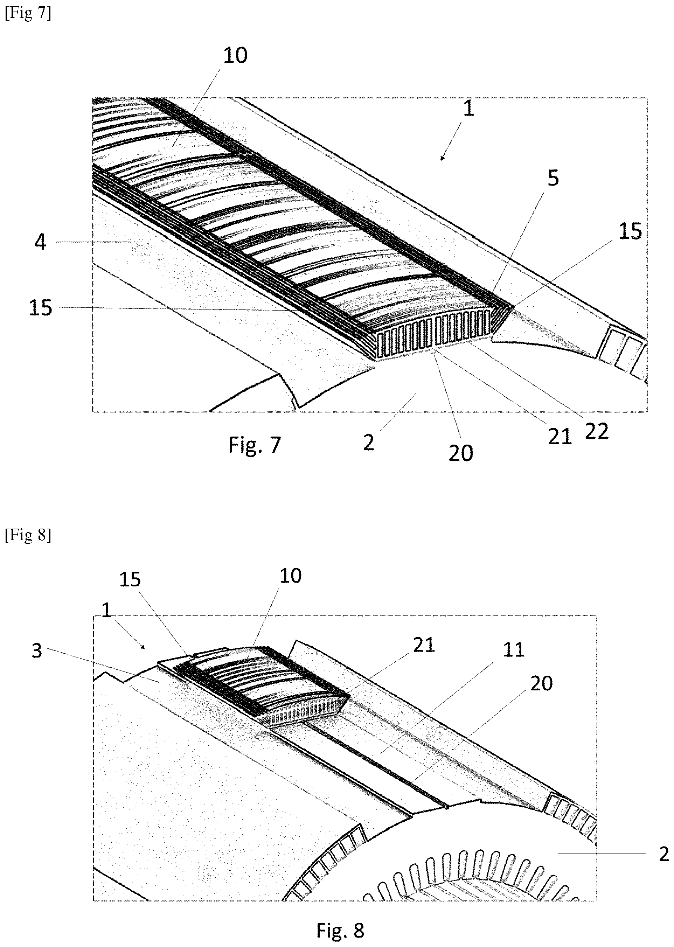

Comme visible sur les figures 7 à 9, les rainures 20 permettent de recevoir des dissipateurs thermiques 10 afin de les positionner et de les centrer. Dans ces exemples, les dissipateurs thermiques 10 comportent une nervure 21 longitudinale sur une face 22 destinée à venir en contact avec la culasse 2, de forme correspondante à celle de la rainure 20, dans cet exemple une forme de demi-cercle en section transversale.

Toujours dans ces exemples, les dissipateurs thermiques 10 comportent des conduits 5 et des ailettes 15 obliques.

Dans l'exemple de la figure 7, le dissipateur thermique 10 s'étend longitudinalement d'un bord à l'autre du stator 1.

Dans l'exemple de la figure 8, le dissipateur thermique 10 s'étend sur une partie seulement de la longueur longitudinale du stator 1. Dans cet exemple, le dissipateur thermique 10 est rapporté sur la culasse 2 à proximité d'une zone de forte production de chaleur du stator 1.

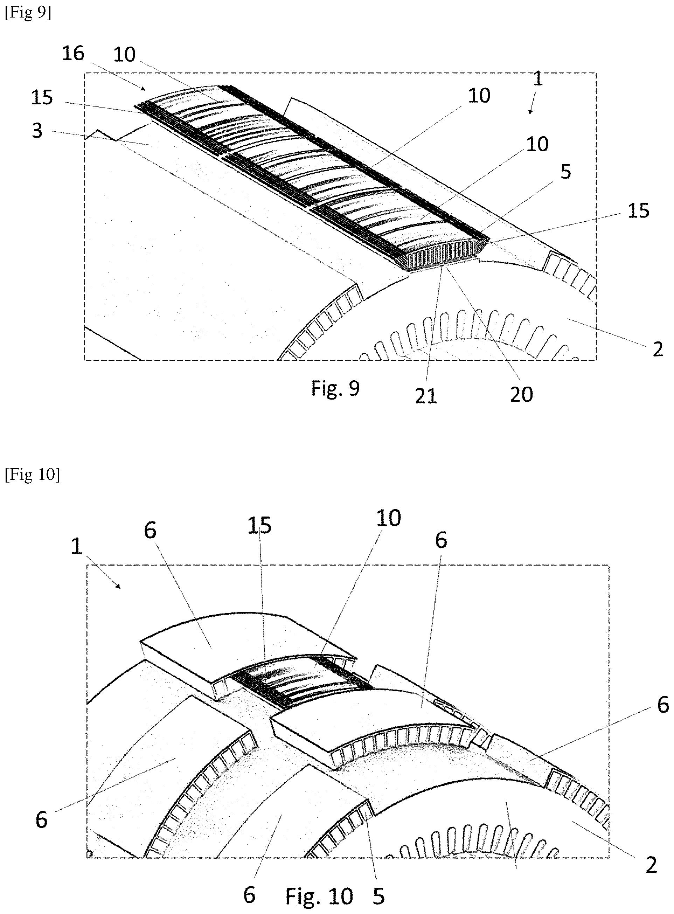

Dans l'exemple de la figure 9, trois dissipateurs thermiques 10 formant un groupe 16 s'étendant partiellement dans la longueur longitudinale de stator 1 sont reçus dans la rainure 20. Dans cet exemple, les dissipateurs thermiques 10 consécutifs le long de l'axe longitudinal Z sont séparés d'un espacement non nul.

L'utilisation de dissipateurs thermiques 10 comme ceux des figures 8 et 9 peut permettre de moduler le nombre de dissipateurs thermiques 10 rapportés en fonction des besoins de refroidissement du stator 1. Par exemple, il est possible de fabriquer des dissipateurs thermiques 10 de taille standard et de déterminer, en fonction de chaque utilisation, le nombre de dissipateur thermique 10 nécessaire, ce qui permet de réduire les coûts de fabrication du stator 1.

Dans l'exemple de la figure 10, le stator 1 comporte des paquets 6 de conduits 5, ménagés dans l'empilement de tôles magnétiques 3, disposés en quinconce longitudinalement et circonférentiellement.

Dans cet exemple, un dissipateur thermique 10 est positionné entre les paquets 6 de conduits 5.

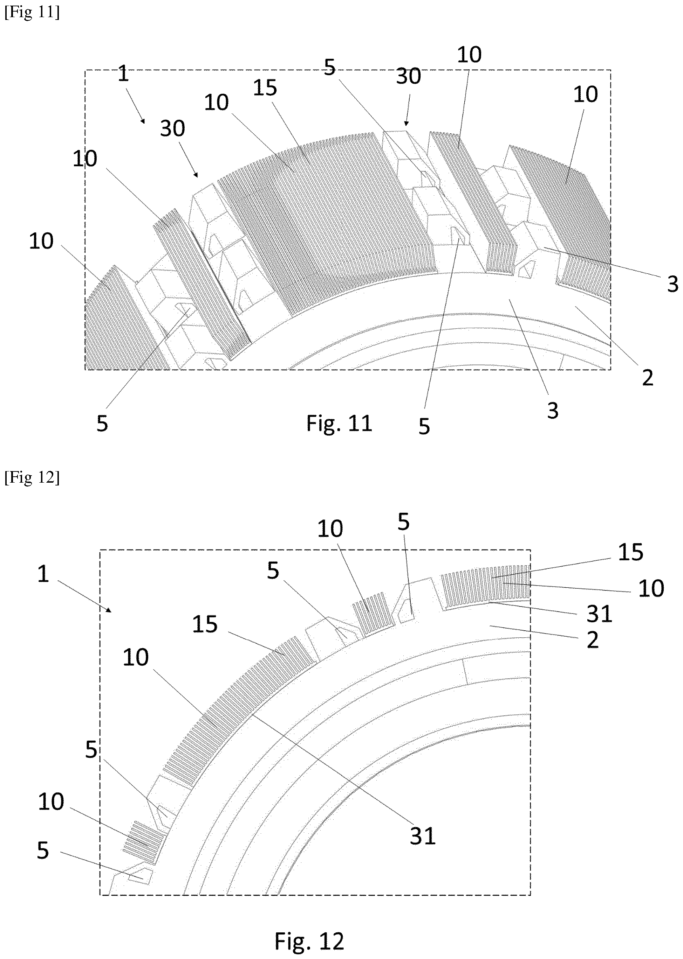

Dans un autre mode de réalisation, dont des exemples sont illustrés sur les figures 11 à 15, la culasse 2 comporte des conduits 5 ménagés dans l'empilement de tôles magnétiques 3 et les dissipateurs thermiques 10 n'en comportent pas.

Dans les exemples illustrés, les conduits 5 ménagés dans l'empilement de tôles magnétiques 3 sont séparés les uns des autres. Dans ces exemples, le stator 1 comporte différents groupes 30 de conduits composés de deux conduits 5 alignés selon l'axe longitudinal Z. Les groupes 30 sont circonférentiellement en quinconces les uns avec les autres.

Les dissipateurs thermiques 10 s'étendent selon l'axe longitudinal Z d'un bord à l'autre du stator 1 entre deux groupes 30 de conduits 5.

Dans l'exemple des figures 11 et 12, les dissipateurs thermiques 10 comportent neuf ou cinquante ailettes 15 radiales reliées entre elles par une plaque 31. La culasse 2 ne présente pas d'aplat 11 et la plaque 31 des dissipateurs thermiques 10 en contact avec la culasse 2 a une forme sensiblement correspondante à celle de la culasse 2.

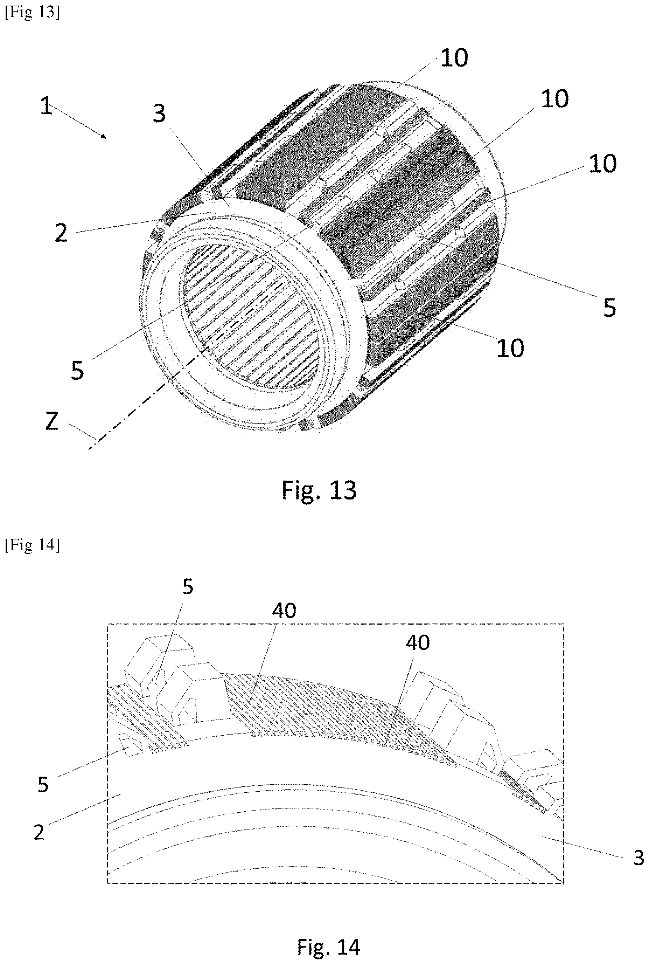

Dans l'exemple des figures 13 à 15, la culasse 2 comporte des encoches 40 formées dans l'empilement de tôles magnétiques 3, dans cet exemple 300 encoches environs, recevant des dissipateurs thermiques 10.

Comme visible sur la figure 14, les encoches 40 s'étendent parallèlement à l'axe longitudinal Z d'un bord à l'autre du stator 1. Elles sont ménagées entre deux groupes 30 de conduits 5 ménagés dans l'empilement de tôles magnétiques 3.

En section transversale, les encoches 40 ont une forme empêchant le mouvement radial des dissipateurs thermiques 10, dans cet exemple une forme de T renversé.

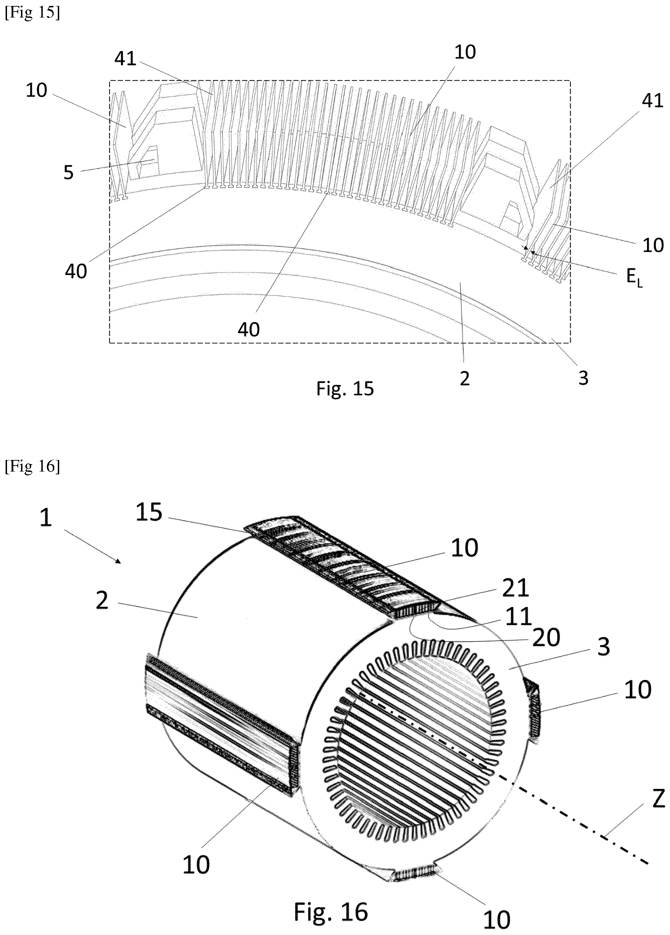

Comme visible sur les figures 13 et 15, les encoches 40 reçoivent des dissipateurs thermiques 10 sous la forme d'une lame 41 droite aplatie et s'étendant selon l'axe longitudinal Z d'un bord à l'autre du stator 1. Dans cet exemple, la lame 41 des dissipateurs thermiques 10 a une épaisseur E_{L} de 1 mm.

La partie de la lame 41 reçue dans l'encoche 40 a une forme et des dimensions sensiblement égales à celles de l'encoche 40. La lame 41 se présente sous la forme d'un T, la barre transversale du T ayant une longueur bien inférieure à celle de la barre verticale.

Dans cet exemple, les dissipateurs thermiques 10 en forme de lame 41 sont formées sur la culasse 2 par coulage d'aluminium sous pression.

Dans un autre mode de réalisation, dont un exemple est illustré sur la figure 16, la culasse 2 ne comporte pas de conduit 5 de refroidissement et les dissipateurs thermiques 10 comportent des conduits 5 de refroidissement. Dans l'exemple de la figure 16, le stator 1 comporte une culasse 2 comportant quatre aplats 11 comportant une rainure 20 sur lesquelles quatre dissipateurs thermiques 10 comportant une nervure 21 sont rapportés. Dans cet exemple, les dissipateurs thermiques 10 s'étendent selon l'axe longitudinal Z d'un bord à l'autre du stator 1 et comportent également des ailettes 15 obliques.

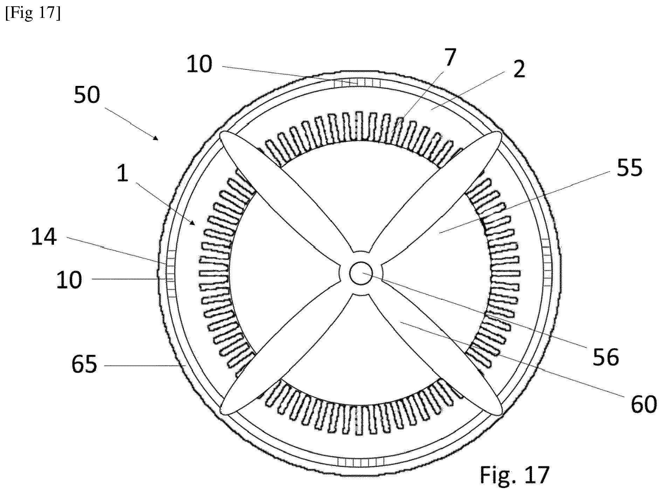

Il est possible d'utiliser le stator selon l'invention dans une machine électrique tournante 50, comme celle de l'exemple de la figure 17. La machine 50 comporte un stator 1 sur lequel sont rapportés par frettage quatre dissipateurs thermiques 10 comportant des conduits 5.

La machine 50 comporte également un rotor 55 inséré dans le stator 1.

La machine 50 comporte un axe de rotation, qui peut être confondu avec l'axe longitudinal Z du stator 1.

Dans cet exemple, la machine 50 comporte un unique ventilateur 60 entraîné par arbre 56 disposé sur le rotor 55. Ce ventilateur 60 permet de produire un flux de gaz, notamment de l'air, d'un côté vers l'autre de la machine, dans un seul sens. Ce flux de gaz travers le stator 1, passant en particulier dans le ou les conduits 5 de refroidissement susmentionnés, et dans le ou les dissipateurs thermiques 10.

La machine 50 comporte, dans cet exemple, une carcasse 65 dans laquelle le stator 1 est inséré. Les dissipateurs thermiques 10 sont dans cet exemple maintenus dans la carcasse 65 par frettage au niveau de leur surface circonférentielle 14.

L'invention n'est pas limitée aux exemples qui viennent d'être décrits.

En particulier, la carcasse peut avoir une forme différente, par exemple hexagonale ou octogonale.

Le stator et les dissipateurs thermiques peuvent comporter un nombre de conduit différent, par exemple compris entre 2 et 200.

Le stator peut comporter un nombre différent de dissipateurs thermiques, par exemple entre 2 et 500.

Les dissipateurs thermiques peuvent être rapportés différemment, par exemple par collage, vissage, montage à force ou soudage.

## Revendications

1. Stator (1) de machine électrique tournante, comportant :
- une culasse (2) comportant un empilement de tôles magnétiques (3), et
- au moins un dissipateur thermique (10) rapporté sur la surface extérieure (4) de la culasse (2),
le stator (1) comportant au moins un conduit (5) de refroidissement ménagé dans l'empilement de tôles magnétiques (3) de la culasse (2) et/ou dans ledit au moins un dissipateur thermique (10).

2. Stator selon la revendication précédente, la culasse (2) comportant au moins un aplat (11), au moins un dissipateur thermique (10) étant rapporté sur l'aplat (11) de la culasse (2).

3. Stator selon l'une quelconque des revendications précédentes, la culasse (2) comportant au moins une rainure (20) recevant au moins un dissipateur thermique (10).

4. Stator selon l'une quelconque des revendications précédentes, la culasse (2) comportant au moins une encoche (40) recevant au moins un dissipateur thermique (10).

5. Stator selon la revendication précédente, ledit au moins un dissipateur thermique (10) se présentant sous la forme d'une lame (41).

6. Stator selon l'une quelconque des revendications précédentes, comportant plusieurs dissipateurs thermiques (10) repartis uniformément sur la surface extérieure (4) de la culasse (2) du stator (1).

7. Stator selon l'une quelconque des revendications précédentes, ledit au moins un dissipateur thermique (10) comportant au moins une ailette (15).

8. Stator selon l'un quelconque des revendications précédentes, comportant des conduits (5) de refroidissement ménagés dans l'empilement de tôles magnétiques (3) de la culasse (2), ledit au moins un dissipateur thermique (10) étant rapporté sur le stator (1) entre lesdits conduits (5) de refroidissement.

9. Stator selon l'une quelconque des revendications précédentes, s'étendant selon un axe longitudinal (Z), ledit au moins un dissipateur thermique (10) s'étendant parallèlement à l'axe longitudinal (Z) du stator (1).

10. Stator selon l'une quelconque des revendications précédentes, ledit au moins un dissipateur thermique (10) étant réalisé dans un matériau à forte conductivité thermique, notamment en aluminium.

11. Stator selon l'une quelconque des revendications précédentes, ledit au moins un dissipateur thermique (10) étant rapporté sur la culasse (2) par collage, soudage, coulage, vissage, montage à force et/ou frettage.

12. Machine (50) électrique tournante, comportant un stator (1) selon l'une quelconque des revendications précédentes, et un rotor (55).

13. Machine selon la revendication précédente, comportant un ventilateur (60) entraîné par le rotor (55).

14. Machine selon l'une quelconque des deux revendications précédentes, comportant une carcasse (65) dans laquelle le stator (1) est inséré.

15. Machine selon la revendication précédente, ledit au moins un dissipateur thermique (10) étant fixé sur la carcasse (65).
